# EUROPEAN PATENT APPLICATION

(11) **EP 4 374 686 A1**
(43) Date of publication of application: **29.05.2024**
(21) Application number: 23153243.3
(22) Date of filing: 25.01.2023
(51) Int. Cl.: A01J 27/04, A47J 9/00, G07F 11/66

(54) **CHEESE CUTTING DEVICE**

(30) Priority: 25.11.2022 TR 202217910
(71) Applicant: Buzkap Sogutma Sanayi Ticaret Anonim Sirketi, 34570 Silivri Istanbul (TR)
(72) Inventor: MIRZAHANYAN, MARIO LEVON, ISTANBUL (TR); YAPRAK, HASAN, ISTANBUL (TR); AKBURAK, OKTAY, ISTANBUL (TR)
(74) Representative: Sevinç, Cenk

(57) **Abstract**

The invention relates to a cheese cutting device that stores many cheese blocks in its structure and enables cutting a single slice;

the cheese cutting device allows a slice of cheese to be cut from the cheese block and presented to the user, comprising

at least one cutting unit (120), the surface of which has at least one cutting blade (121) at its end, and which enables the cheese (200) to be cut at the specified thickness by moving the surface back and forth with the help of the pneumatic piston (190) contained therein comprising at least one visor (140) preventing the user's hand from reaching the cutting unit (120),

at least one box (122) in which the slice of cheese (200) cut by the cutting unit (120) falls into and from which the user can take the slice of cheese (200) cut;

at least one cover (150) covering the opening through which cheese (200) is entered into the chamber,

at least one photocell sensor (160) that enables the cutting process to start by informing the electronic control unit when motion is detected on it,

at least one electronic control unit that prevents the cutting unit (120) from working when the cover is open, or when the visor is not attached, and activates the cutting unit (120) when motion is detected in the photocell sensor (160).

## Description

### Technical field of the invention

The invention relates to a cheese cutting device that cuts a slice from a cheese block and presents it to the user and ensures that this cutting process is done automatically, independently of an employee.

### State of the Art

Cheese is produced by fermenting the milk obtained from mammals such as cows, buffaloes, goats and sheep, and passing them through various processes. Cheese products, which have an important place in Turkish cuisine, have different varieties in terms of production method, dairy product, aroma and taste. Cheese products vary in taste, production method and the milk used in making them. Some cheeses can be consumed after ripening, but some cheese products can be consumed after fermentation. The main types of cheese are ezine cheese, gecil cheese, mihaliç cheese, tulum cheese and braided cheese.

The fact that the variety of cheese produced is quite high has brought along the habit of tasting cheese while making cheese purchasing choices. Before buying cheese, customers taste the cheeses. In this way, they can choose the taste of the cheese they will buy before purchasing. In addition, cheese producers slice and present their cheese to users in sales regions to advertise their cheeses. These cheeses are cut in the presence of an attendant or with existing cheese cutting machines.

There are many cheese cutting devices available today. These devices are used to slice the cheese added to its reservoir in one go, at the specified size and in its entirety. This application is widely used for the user to buy sliced cheese. However, if the user only wants to taste the cheese, it is not appropriate to cut all the cheese with these devices. It is common for an attendant to cut a piece of the cheese off the edges so that the tasting can be done. This leads to problems such as not being able to cut and disperse the cheese properly. In addition, users have to get help from a staff in order to taste cheese. This situation also leads to loss of workforce.

In current applications, cheese cutting is done at room temperature. In order not to spoil the cheese, it should be kept between certain temperatures. Cheese, which is kept at room temperature for a certain period of time, is exposed to deterioration. In this case, the deterioration of the consumed cheese endangers human health. For this reason, it is of great importance to perform cutting in a cooler. However, today there is no cheese cutting device that cuts in a cooler.

Although various suggestions and applications have been developed for cutting cheese in the state of the art, these developments are for cutting the entire cheese block. Some applications of inventions developed for this purpose are given below.

The invention that is the subject of the application no "TR2014/15334" in the state of the art is a white cheese cutting set, and its feature consists of a blade, spring, body, spring and blade fixing part, handle, and Teflon roller parts. The invention enables to cut the cheese produced in white cheese vats longitudinally at one time and transversely three times. In this invention, it is mentioned that the cheese bowl is designed considering that all of the cheese blocks are in standard sizes.

The invention that is the subject of the application no "TR2020/21610" in the state of the art relates to a cheese slicing machine comprises at least one cutting slot mounted on a durable, stainless and metallic sub-platform, cutting slot adjustment supports to fix the material placed in the cutting slots, slicing the material placed in the cutting slot, cutting wires made of stainless metallic material, upper cutting wire casters that can move along the upper roulette carriage to ensure that the cutting wires cut as desired, lower shears that can move along the lower roulette carriage, wire rollers and a cutting arm capable of rotating from the cutting arm pivot point to manually create the necessary pressure to provide cutting.

The invention that is the subject of the application no "CN111823299A" in the state of the art relates to the technical field of food processing equipment, especially an automatic cheese slicing device. The invention can perform automatic feeding, slicing and material taking actions of cheese. According to the automatic cheese slicing device, multiple suction cups are adopted to suck and pick up the cheese after it is cut to receive the material, and the problem of cheese breaking due to manual contact with the cheese is solved.

The embodiments in the state of the art are based on the principle of slicing the cheese block in one go. This situation cannot be used for situations where the entire cheese block cannot be cut. The cheese cutting machines in the state of the art work with the attendant. There is no system that automatically cuts a cheese slice and presents it to the user by detecting the hand movement of the user to get cheese. For this reason, in order for the seller to promote cheese, there is a need for a device that enables the cutting of a slice without cutting the entire cheese block and presenting it to the user, and ensures that this cutting process is done automatically, independently of an attendant.

As a result, due to the negativities described above and the inadequacy of the existing solutions on the subject, it was necessary to make an improvement in the relevant technical field.

### The aim of the invention

The most important aim of the invention is to provide the ability to cut a slice on the cheese block at the desired thickness without cutting the entire brick. In this way, people who want to taste cheese will be able to taste without cutting the entire brick of the cheese.

Another aim of the invention is to provide a device with a sensor that will detect when the user who wants to taste cheese extends his hand to the device and allow a cheese slice to be cut. In this way, the help of an attendant is not needed for cheese tasting.

Another aim of the invention is to provide a cooling unit for cutting and keeping the cheese block. By this way, the cheese is prevented from being spoiled by being cut in a cooler environment.

Another aim of the invention is to provide a device with its cheese loading chamber being adjustable according to many brick types added to the chamber. In this way, cheese blocks of different sizes can be put into the cheese loading chamber.

### Description of drawings:

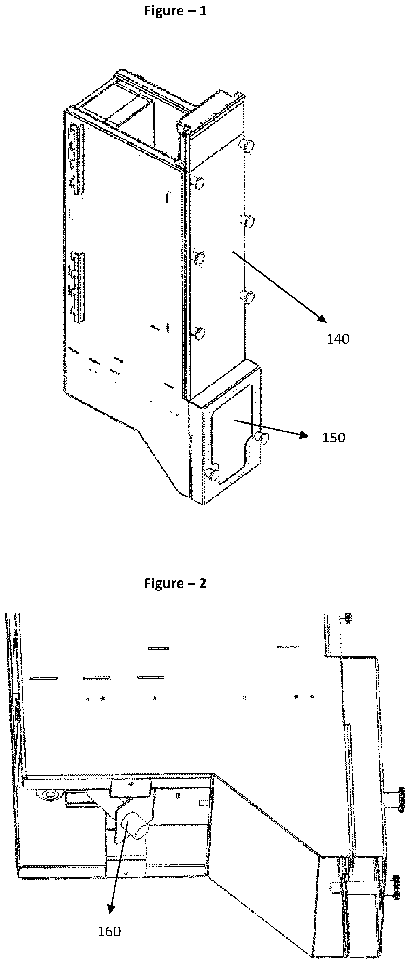

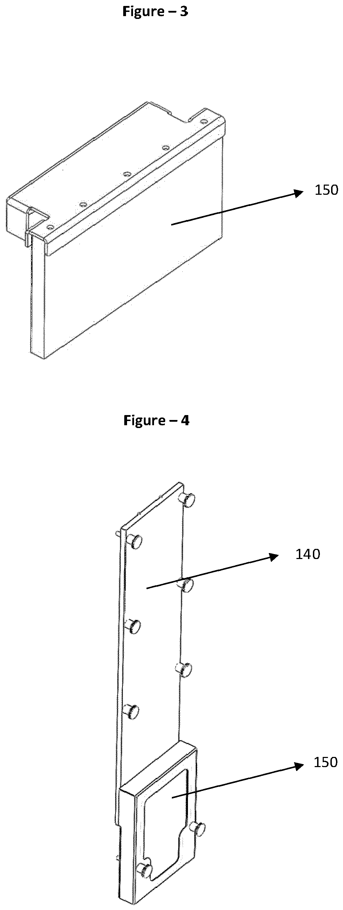

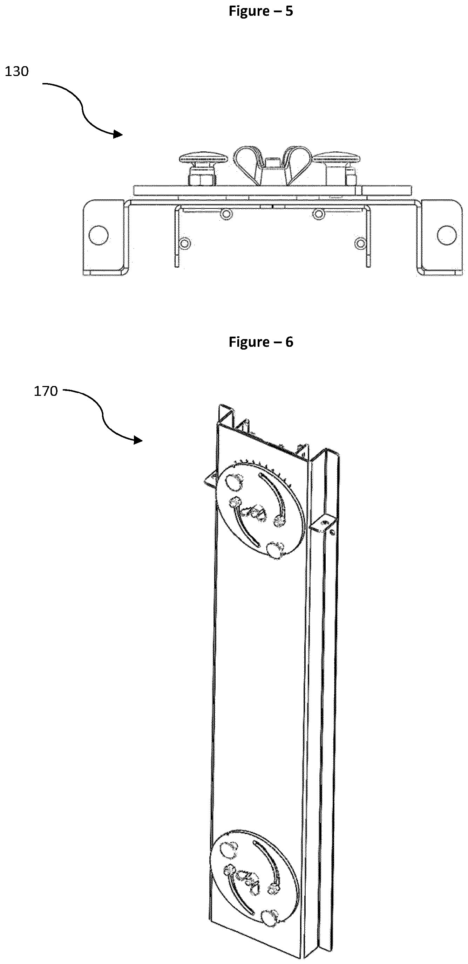

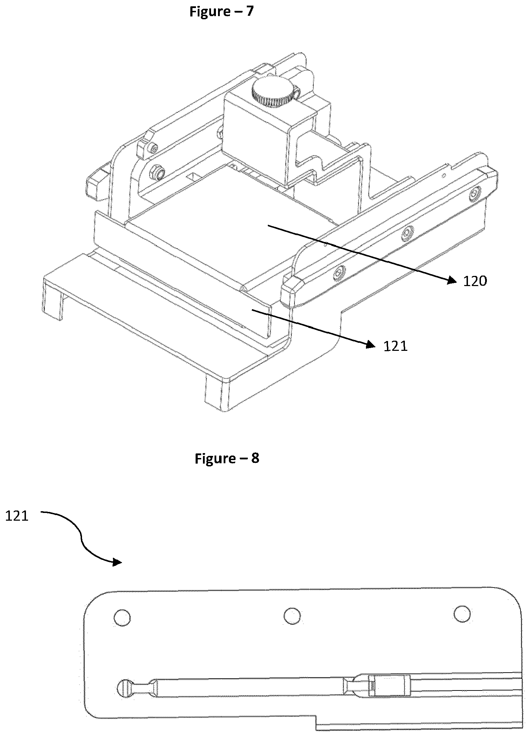

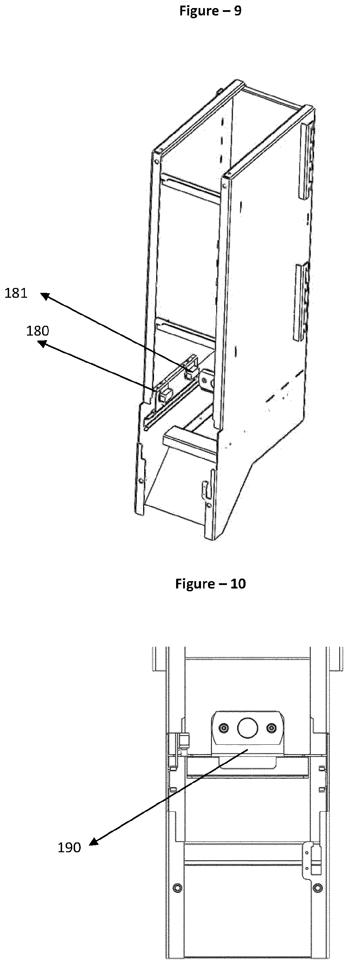

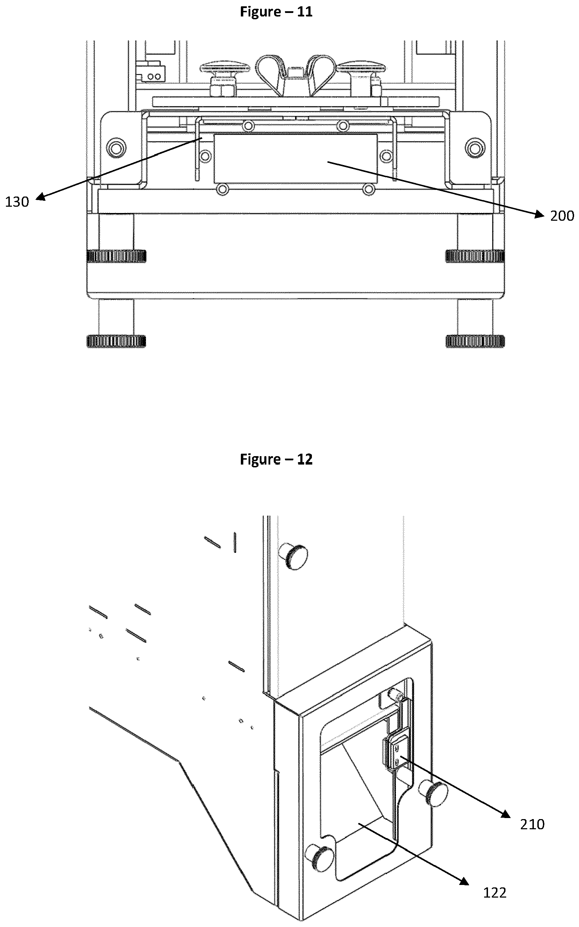

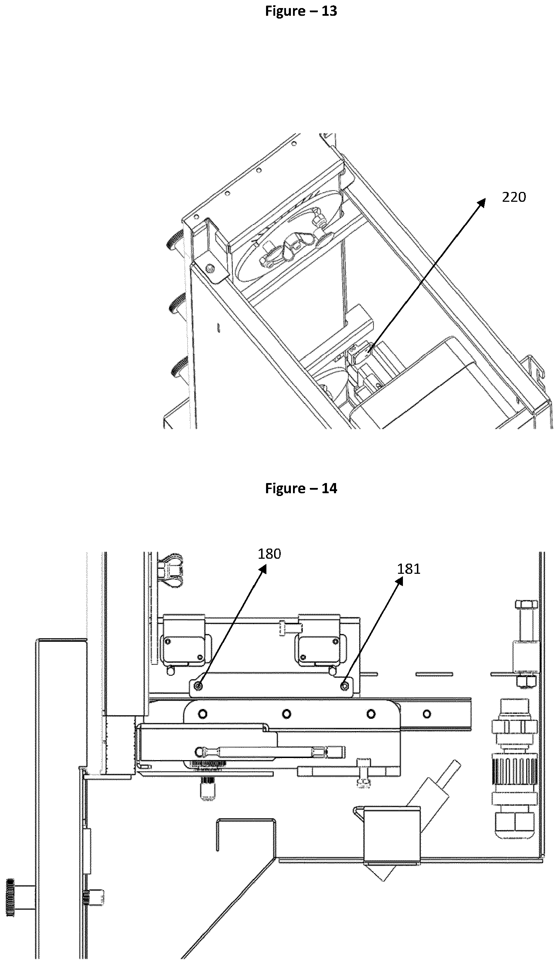

FIGURE-1 is the drawing showing the image of the cover and the visor that are the subject of the invention.
FIGURE-2 is the drawing showing the image of the photocell sensor that is the subject of the invention.
FIGURE-3 is the drawing showing the image of the cover that is the subject of the invention.
FIGURE-4 is the drawing showing the image of the cover and the visor that are the subject of the invention.
FIGURE-5 is the drawing showing the image of the loading chamber that is the subject of the invention.
FIGURE-6 is the drawing showing the image of the cam mechanism that is the subject of the invention.
FIGURE-7 is the drawing showing the image of the cutting unit that is the subject of the invention.
FIGURE-8 is the drawing showing the image of the cutting blade that is the subject of the invention.
FIGURE-9 is the drawing showing the image of the alignment key that is the subject of the invention.
FIGURE-10 is the drawing showing the image of the pneumatic piston that is the subject of the invention.
FIGURE-11 is the drawing showing the image of the cheese and the loading chamber that is the subject of the invention.
FIGURE-12 is the drawing showing the image of the switch2 that is the subject of the invention.
FIGURE-13 is the drawing showing the image of the switch that is the subject of the invention.
FIGURE-14 is the drawing showing the image of the alignment switches that are the subject of the invention.

### Reference numbers

- 120.: Cutting unit
- 121.: Cutting blade
- 122.: Box
- 130.: Loading hopper
- 140.: Visor
- 150.: Cover
- 160.: Photocell sensor
- 170.: Cam mechanism
- 180.: Alignment switch_1
- 181.: Alignment switch_2
- 190.: Pneumatic piston
- 200.: Cheese
- 210.: Switch2
- 220.: Switch

### Description of the invention

The invention relates to a cheese cutting device that cuts a slice from a cheese block and presents it to the user and ensures that this cutting process is done automatically, independently of an employee.

Cheese cutting device comprises at least one visor (140) preventing the user's hand from reaching the cutting unit (120); at least one switch2 (210) on the cutting unit (120) that detects whether the visor is attached in the area where the visor (140) will be placed; at least one alignment switch_2 (181) in which the cutting blade (121) is positioned when inoperative; at least one alignment switch_1 (180) which, when sensing the cutting blade (121), moves the cutting blade (121) from its current position to the position of alignment switch_2 (181) with the aid of the piston; at least one cutting unit (120), the surface of which has at least one cutting blade (121) at its end, and which enables the cheese (200) to be cut at the specified thickness by moving the surface back and forth with the help of the pneumatic piston (190) contained therein; at least one box (122) in which the slice of cheese (200) cut by the cutting unit (120) falls into and from which the user can take the slice of cheese (200) cut; at least one cover (150) covering the opening through which cheese (200) is entered into the chamber comprising at least one switch (220) that transmits the closed/open state of the cover (150) to the electronic control unit; at least one loading chamber (130) into which cheeses (200) can be placed; at least one photocell sensor (160) that enables the cutting process to start by informing the electronic control unit when motion is detected on it; at least one electronic control unit that prevents the cutting unit (120) from working when the cover is open upon receiving the on/off information from the switch (220) located on the cover (150), or when the visor is not attached upon receiving the information from the switch2 (210) located on the visor, and activates the cutting unit (120) when motion is detected in the photocell sensor (160) and adjusts the position of the cutting blade (121) according to information coming from alignment switch_1 (180) and alignment switch_2 (181).

The cutting unit (120) provides a back-and-forth movement of the surface with the cutting blade (121) at the end, with the help of a pneumatic piston (190). There is a cutting blade (121) at the end of the surface of the cutting unit (120). Due to the back-and-forth movement of the cutting unit (120), the cutting blade (121) at its end slices the cheese (200) at the determined thickness from the cheese (200) block. The cutting blade (121) is in the form of a concave radius so that the cheese falls off without sticking. The cutting surface of the cutting unit (120) comprising the blades is positioned on the cheese block. With the back-and-forth movement of the surface in the cutting unit (120), the cutting blades (121) located at the surface end move on the cheese block and ensure that the cheese (200) slice of the desired thickness is cut. There is a box (122) for this cut piece of cheese to reach the consumer. The sliced cheese falls into a box (122) for the customer to receive.

The cheese machine is placed in a refrigerated display cabinet to preserve the freshness, and prevent softening, of the cheese (200) blocks. The cooler display cabinet ensures that the cheeses (200) in the cheese machine can be kept at the desired coldness. Cheese blocks, the temperature of which is preserved, do not deteriorate and can be cut more smoothly with the effect of coldness during the cutting process.

There is a loading chamber (130) in the cheese cutting device that allows the cheeses (200) to be placed inside. There is no standard size of the cheese (200) blocks to be placed. For this reason, cheese (200) blocks can be of different sizes. By using the cam mechanism (170) on the loading chamber (130), the loading chamber (130) is adjusted according to different cheese widths. In this way, it is ensured that cheeses (200) produced in different sizes can be placed in the loading chamber. The loading chamber (130) includes at least one shaft that makes linear contact with the cheese, whose cut has been completed, to slide it from the chamber to the box (122).

It is important that the cutting unit (120) is at the level of the cheese (200) that is desired to be cut, in order not to make a wrong cut. There are alignment switch_1 (180) and alignment switch_2 which inform whether the cutting unit (120) is at the front or back. These alignment switches prevent the cutting blade (121) from moving out of the fixed range. Alignment switch_1 says that the cutting blade (121) has finished cutting the cheese. When the alignment switch_1 signal is detected, the cutting blade (121) moves from its current position to the alignment switch_2 position with the help of the piston. Alignment switch_2 is where the cutting blade (121) does not cut the cheese and the cutting blade (121) is positioned until a signal comes from the photocell sensor (160). In this way, incorrect cutting operations are prevented by misaligning the cutting blades.

The loading chamber (130) comprises a cover (150) on it. The cover (150) is located on the loading chamber (130) and covers the opening where the cheese (200) is entered into the chamber. There is a switch (220) on the cover (150). The switch (220) transmits the closed/open status of the cover (150) to the electronic control unit. When the cover (150) is in the open position, the operation of the cutting unit (120) is prevented by the electronic control unit.

Since the cutting process is performed with the cutting blades (121) in the cutting unit (120), a visor (140) is placed in the cutting unit (120) to prevent the user's hand from reaching. This visor (140) is placed on the cutting unit (120). A switch2 (210) is located on the cutting unit (120) in the area where the visor will be placed. This switch2 (210) checks whether the visor is attached or not and transmits it to the electronic control unit. The electronic control unit prevents the cutting unit (120) from operating if the visor is not installed.

There is a sensor on the cheese cutting device. This sensor has photocell feature. When users extend their hand to this sensor, the sensor communicates with the electronic control unit, enabling the cutting unit (120) to operate and to cut a cheese (200) slice.

In communication with the switches, the sensor and the cutting unit (120), the electronic control unit transmits the user information coming from the sensor to the cutting unit and ensures the initiation of the cutting process. The electronic control unit receives the on/off information from the switch located on the cover and prevents the cutting unit (120) from operating when the cover is open. The electronic control unit prevents the cutting unit (120) from operating when the visor is not attached, upon receiving the information from the switch2 (210) located in the visor on whether it is attached or not.

The cheese (200) block, which is desired to be cut, is placed into the cheese cutting device by using the loading chamber (130). Then, the cover (150) of the loading chamber is closed. A visor (140) is placed at the inlet of the cutting unit (120) to prevent the users' hands from entering the cutting unit (120). When the electronic control unit receives the information from the switches (220) on the visor and the cover that the cover is closed and that the visor is attached, the cutting unit (120) becomes ready for the cutting process. When the user reaches out to the sensor on the cheese cutting device, the electronic control unit receives the information from the sensor and enables the cutting unit (120) to perform the cutting process. When the cutting process is completed, the cut cheese (200) slice falls into a box (122). The user takes the cheese (200) slice from the box (122) and tastes it.

## Claims

1. A cheese cutting device that allows a slice of cheese to be cut from the cheese block and presented to the user, comprising
at least one cutting unit (120), the surface of which has at least one cutting blade (121) at its end, and which enables the cheese (200) to be cut at the specified thickness by moving the surface back and forth with the help of the pneumatic piston (190) contained therein comprising at least one visor (140) preventing the user's hand from reaching the cutting unit (120), at least one switch2 (210) on the cutting unit (120) that detects whether the visor is attached in the area where the visor (140) will be placed, at least one alignment switch_2 (181) in which the cutting blade (121) is positioned when inoperative, at least one alignment switch_1 (180) which, when sensing the cutting blade (121), moves the cutting blade (121) from its current position to the position of alignment switch_2 (181) with the aid of the piston,
at least one box (122) in which the slice of cheese (200) cut by the cutting unit (120) falls into and from which the user can take the slice of cheese (200) cut;
at least one cover (150) covering the opening through which cheese (200) is entered into the chamber comprising at least one switch (220) that transmits the closed/open state of the cover (150) to the electronic control unit; at least one loading chamber (130) into which cheeses (200) can be placed comprising at least one shaft that makes linear contact with the cheese, which has been cut, slides it from the chamber to the box (122).
at least one photocell sensor (160) that enables the cutting process to start by informing the electronic control unit when motion is detected on it.
at least one electronic control unit that prevents the cutting unit (120) from working when the cover is open upon receiving the on/off information from the switch (220) located on the cover (150), or when the visor is not attached upon receiving the information from the switch2 (210) located on the visor, and activates the cutting unit (120) when motion is detected in the photocell sensor (160) and adjusts the position of the cutting blade (121) according to information coming from alignment switch_1 (180) and alignment switch_2 (181).

2. Cheese cutting device according to Claim 1, comprising the loading chamber (130) that can be collapsed and expanded using the cam mechanism (170).

3. Cheese cutting device according to Claim 1, comprising the concave radius cutting blade (121) for cheese to fall off without sticking.
